(19) Europäisches Patentamt
European Patent Office
Office européen des brevets

(11) **EP 4 454 966 B1**

(12) **EUROPEAN PATENT SPECIFICATION**

(45) Date of publication and mention
of the grant of the patent:
**26.11.2025 Bulletin 2025/48**

(21) Application number: **23170866.0**

(22) Date of filing: **28.04.2023**

(51) International Patent Classification (IPC):
***B60W 40/076*** *(2012.01)*

(52) Cooperative Patent Classification (CPC):
**B60W 40/076;** B60T 2210/22; B60W 2520/125;
B60W 2520/14; B60W 2520/28

(54) **METHOD FOR DETERMINING A CURRENT ANGLE OF LATERAL INCLINATION OF A CURVED ROADWAY**

VERFAHREN ZUR BESTIMMUNG EINES AKTUELLEN WINKELS DER SEITLICHEN NEIGUNG EINER GEKRÜMMTEN FAHRBAHN

PROCÉDÉ DE DÉTERMINATION D'UN ANGLE ACTUEL D'INCLINAISON LATÉRALE D'UNE CHAUSSÉE INCURVÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**30.10.2024 Bulletin 2024/44**

(73) Proprietor: **Valeo Internal Automotive Software Egypt, LLC**
**Giza, Cairo (EG)**

(72) Inventors:
• **Radwan, Mohamed**
**Cairo (EG)**
• **Elfarouk, Omar**
**Cairo (EG)**

(74) Representative: **Hofstetter, Schurack & Partner Patent- und Rechtsanwaltskanzlei PartG mbB Balanstraße 73 / Haus 31A 81541 München (DE)**

(56) References cited:
EP-B1- 1 013 524          WO-A1-2021/144105
DE-A1- 10 242 123         DE-A1- 102012 210 535
DE-A1- 102013 216 667     DE-A1- 19 848 236

**Description**

The present invention is directed to a computer-implemented method for determining a current angle of lateral inclination of a curved roadway, wherein the method is carried out during a driving maneuver of a vehicle along the curved roadway, preferably in real-time. The invention is further directed to a method for guiding a vehicle at least in part automatically, to an electronic vehicle guiding system and a vehicle with such a system, to a data processing apparatus with at least one computing unit and to computer program products.

Banked or laterally inclined roads are widely spread especially at highway roads to provide more safety for a vehicle's steering maneuvers at high speeds. The inclination angle of a banked road is commonly designed to let a component of the vehicle's weight compensate the outwards centrifugal force acting on the vehicle to keep it stable on the road with limited or no side slipping movement. One of the challenges of Automatic Driving solutions is to estimate the lateral inclination angle of such a banked road, which can have great benefit on the highway end-user functionalities like Lane Keep Assist (LKA) and Lane Centering Assist (LCA). The more accurate such an assistant system estimates the lateral inclination angle, the more accurate it can localize the vehicle within a lane along such a banked road, and the more appropriate it can provide the necessary steering and acceleration actions to guide the vehicle.

DE 102 42 123 A1 describes a driving dynamics control system with a steep curve detection. It describes a method for checking the sensors of the driving dynamics control system using mathematical models to verify the measurement signal of one of the sensors based on measurement signals from other sensors. A road inclination independent sensor verification comprises a first step in which a first group of sensors is verified by means of a first model which is independent of road inclination and a second step in which a second group of sensors is verified by means of a second model which is independent of road inclination.

DE 10 2012 210 535 A1 describes a method for operating a driver assistance system in a motor vehicle, whereby the measured values of a lateral acceleration, a yaw rate, a speed and a steering angle of the motor vehicle are recorded. Then a first ground inclination angle, a second ground inclination angle and a third ground inclination angle are calculated from three of the said measured values. The ground inclination angles are used to determine a first, a second and a third ground evaluation variable.

DE 10 2013 216 667 A1 describes a method for the dynamic estimation of road gradients. Based on a vehicle's longitudinal acceleration and wheel torque, an estimate of the vehicle's mass is made. Based on the vehicle's speed, wheel torque and estimated vehicle mass, an output is then generated that indicates the dynamic road gradient.

EP 1 013 524 B1 describes a method of detecting a signal fault in a motion sensor for a motor vehicle based on estimated values of road bank angle, wherein a first estimated value of road bank angle is determined based on a lateral acceleration signal of the motor vehicle and wherein a second estimated value of road bank angle is determined based on a yaw rate signal of the motor vehicle. Should the first or second estimated values of road bank angle exceed a corresponding threshold value, a lateral acceleration signal fault or a yaw rate signal fault is indicated, respectively.

WO 2021/144105 discloses a method for determining a current angle of lateral inclination of a curved roadway, wherein the determination is based on a difference in velocity of two different wheels of the vehicle while driving along the curved roadway. The difference in velocities, however, may not be significant in curves with a very large radius and correspondingly small yaw rate (lower steering action). Thus, the current angle of lateral inclination may not be reliably determined in such curves.

US 2017/0259818 A1 discloses a method for determining a maximum permissible curve speed of a motor vehicle as a function of lateral inclination of the curved roadway. The speed may be determined based on a measured lateral acceleration of the vehicle while driving along the curved roadway. The lateral acceleration, however, may not be suited for determining the angle of lateral inclination in curves with a very small radius and correspondingly high yaw rate (higher steering action). Thus, the current angle of lateral inclination may not be reliably determined in such curves.

It is an object of the present invention to improve the reliability of determination of a current angle of lateral inclination of a curved roadway.

This object is achieved by the respective subject-matter of the independent claims. Further implementations and preferred embodiments are subject-matter of the dependent claims.

The invention is based on the idea to use two different approaches, first and second approach here and in the following, to determine the current angle of lateral inclination of a curved roadway, wherein a respective approach is chosen based on the absolute value of a current yaw rate of the vehicle while driving along the curved roadway.

Here and in the following, all steps of a computer-implemented method according to the invention may be carried out by a computing unit, in particular a computing unit of the vehicle and/or a computing unit of a cloud computer. The computing unit may comprise one or more subunits, which may or may not be spatially distributed. For example, one or more electronic control units, ECUs, of the vehicle may comprise the computing unit or vice versa.

According to an aspect of the present invention, a computer-implemented method for determining a current angle of lateral inclination $\alpha$ of a curved roadway during a driving maneuver of a vehicle along the curved roadway is provided. Therein, during the driving maneuver, a current yaw rate $\dot{\theta}$ of the vehicle is determined or received. The current yaw rate may for example be determined or measured by an IMU of the vehicle (IMU - inertial measuring unit) and transferred for further processing to a computing unit of the vehicle. An IMU may comprise an accelerometer and/or a gyroscope and be able to determine the rotation and speed of the vehicle.

According to the inventive method, two different approaches can be followed to determine the angle $\alpha$, depending on the absolute value of the current yaw rate $\dot{\theta}$ of the vehicle.

The first approach is chosen, if the absolute value of the current yaw rate $\dot{\theta}$ is greater than a predefined threshold $\dot{\theta}_{th}$. It comprises the determination of a difference in velocity from current velocities of two wheels of the vehicle in the direction of movement of the vehicle, wherein the two wheels share either a front or a rear axle of the vehicle as their common axle. The velocity of a wheel in the direction of movement of the vehicle may be determined based on the signal of a wheel rotation sensor, which can be designed to measure an angle of rotation of the wheel during a predefined time interval, wherein the velocity of the wheel in the direction of movement of the vehicle may be derived from these parameters. In case that the two wheels are steerable wheels, a steering angle of the wheels can be taken into account to determine the projected velocities of the wheels in the direction of movement of the vehicle.

According to the first approach, the current angle of lateral inclination $\alpha$ of the roadway is calculated based on a ratio of the difference in velocity from the current projected velocities of the wheels in the direction of movement of the vehicle against the product of the current yaw rate $\dot{\theta}$ and a distance $w$ between the centers of the two wheels along their common axle. Therein, the distance $w$ may be a predefined parameter, which can be received from a collection of parameters for the respective vehicle, for example from a look-up table.

The second approach is chosen, if the current yaw rate $\dot{\theta}$ is less than the predefined threshold $\dot{\theta}_{th}$. It comprises the determination of the vehicle's lateral acceleration $a_y$ as the acceleration component directed towards the rotational center of the curved roadway, wherein the lateral acceleration $a_y$ equals the difference between the gravitational acceleration from an inclined component of the vehicle's weight and the centrifugal acceleration resulting from the driving maneuver of the vehicle along the curved roadway. The lateral acceleration may for example also be determined by the vehicle's IMU. Further, an average velocity $v$ of the two wheels in the direction of movement of the vehicle is determined.

According to the second approach, the current angle of lateral inclination $\alpha$ of the curved roadway is calculated based on a ratio of the sum of the lateral acceleration $a_y$ and the product of the average velocity $v$ and the current yaw rate $\dot{\theta}$ against the gravitational acceleration $g$.

If the current yaw rate $\dot{\theta}$ is equal to the predefined threshold $\dot{\theta}_{th}$, either one of the two approaches can be chosen. The threshold can be in the order of 20 °/sec $\approx$ 0.35 rad/sec.

The inventive method is advantageous in that it allows choosing between the two described approaches in order to provide a reliable determination of a current angle of lateral inclination of a curved roadway depending on the current yaw rate of the vehicle.

In other words, the invention provides a complete, efficient and cheap solution to estimate the inclination of a banked road based on the basic sensors signals of wheels and Inertial Measuring Unit (IMU) available almost in all vehicles. The first approach is based on the difference in the velocities of two wheels along a common axle, for example the rear right wheel and the rear left wheel of the vehicle, and comparing it against the yaw rate determined by the IMU. The second approach is based on the lateral acceleration determined by the IMU and adding to it the centrifugal acceleration corresponding to the current vehicle steering maneuver. Finally, the two approaches can be combined together in a complete approach to estimate the banked road inclination depending on the extent of the steering maneuvering done by the vehicle, which can be expressed in terms of the current yaw rate determined by the IMU.

The invention also includes implementations or embodiments that provide additional advantages.

According to an implementation of the first approach, the current angle of inclination $\alpha$ is calculated using the following equation I:

$$\alpha = \cos^{-1}\left(\frac{v_R - v_L}{\dot{\theta}\, w}\right),$$

wherein $\alpha$ denotes the angle of lateral inclination of the roadway, $v_R$ denotes the velocity of the first of the two wheels in the direction of movement of the vehicle, for example the right rear wheel of the vehicle, $v_L$ denotes the velocity of the second of the two wheels in the direction of movement of the vehicle, for example the left rear wheel of the vehicle, $\dot{\theta}$ denotes the yaw rate of the vehicle and $w$ denotes the distance between the two wheels along their common axle. As the velocity of a wheel is the product of the yaw rate of the vehicle and the radius of rotation of the wheel (i. e. the distance from the wheel to the Center of Rotation of the vehicle), equation I can be deduced for fixed or non-steerable wheels based on basic trigonometric rules.

According to an implementation of the second approach, the current angle of inclination $\alpha$ is calculated using the following equation II:

$$\alpha = \left| \sin^{-1}\left( \frac{a_y + v\,\dot{\theta}}{g} \right) \right|,$$

wherein $a_y$ denotes the lateral acceleration of the vehicle, $v$ denotes the average velocity of the two wheels in the direction of movement of the vehicle, $\dot{\theta}$ denotes the yaw rate of the vehicle and $g$ denotes the gravitational acceleration.

According to a further implementation of the first approach, the two wheels are steerable wheels, wherein a respective steering angle of each of the two wheels is considered in calculating the current angle of inclination $\alpha$.

In further implementations of the first approach, wherein the calculation of the lateral inclination angle is done for steerable wheels, the current angle of inclination $\alpha$ is calculated based on the projected velocities $v_{RP}, v_{LP}$ of the wheels. Therein, the projected velocities $v_{RP}, v_{LP}$ represent the velocity components of the current wheel velocities in the direction of movement of the vehicle and are calculated based on the respective steering angle of each of the two wheels and the respective current velocity of each of the two wheels. The current velocities may be projected onto a virtual common axle of the two steerable wheels, wherein the virtual common axle runs through the center of rotation of the vehicle during the driving maneuver along the curved roadway and through the centers of the two wheels.

The steering angle of each wheel may be different, such that the vehicle is rotating with all its wheels having a common center of rotation point. However, there may be vehicles with steerable rear wheels, wherein one signal value $\delta_R$ for the rear wheel steering is provided, which shall be conceptually a virtual rear wheel angle located at the center of the rear axle. Those vehicles may also provide one signal $\delta_F$ for the front steering at the center of the front axle. Based on the provided virtual rear wheel angle at the center of the rear axle and based on the virtual front wheel angle at the center of the front axle, the wheel angle of each of the right and left wheels can be computed separately. Here, the predefined distance $\ell$ between the front and rear axles (the wheelbase) and distance $w$ between the centers of the rear right and left wheels have to be considered. Taking into account the radius of rotation of the vehicle $R$, that is the distance between the center of rotation (CoR) and the longitudinal axis of the vehicle, the wheel angles of the right and left wheels $\varphi_R, \varphi_L$ can be computed as follows:

$$\tan(\delta_F) + \tan(-\delta_R) = \frac{\ell}{R}$$

$$R = \left[ \frac{\ell}{\tan(\delta_F) - \tan(\delta_R)} \right]$$

$$\tan(\varphi_R) = \left( \frac{R}{R + \frac{w}{2}} \right) \tan(\delta_R)$$

$$\tan(\varphi_L) = \left( \frac{R}{R - \frac{w}{2}} \right) \tan(\delta_R)$$

By substituting $R$ with terms of the given input signals of virtual front and rear wheel angles, the final equations to compute the wheel angles at the rear right and left wheels can be obtained as follows:

$$\tan(\varphi_R) = \left( \frac{\ell}{\ell + \frac{w}{2}\left[ \tan(\delta_F) - \tan(\delta_R) \right]} \right) \tan(\delta_R)$$

$$\tan(\varphi_L) = \left( \frac{\ell}{\ell - \frac{w}{2}\left[ \tan(\delta_F) - \tan(\delta_R) \right]} \right) \tan(\delta_R)$$

Then, by projecting the velocities of the two rear wheels obtained at the real rear axle to the virtual rear axle, which is aligned with the CoR of the vehicle, the projected velocities of the rear right and left wheels in the direction of motion of the vehicle can be computed as follows:

$$v_{RP} = v_R \times \cos(\varphi_R)$$

$$v_{LP} = v_L \times \cos(\varphi_L)$$

According to a further implementation of the first approach, the current angle of inclination $\alpha$ is calculated using the following equation III, considering the projected velocities $v_{RP}, v_{LP}$ of the steerable wheels:

$$\alpha = \cos^{-1}\left(\frac{v_{RP} - v_{LP}}{\dot{\theta}\, w}\right).$$

According to a further implementation, the current yaw rate $\dot{\theta}$ and/or the vehicle's lateral acceleration $a_y$ is determined by or received from an inertial measuring unit (IMU) of a driver assistance system of the vehicle. This is advantageous as most of the modern vehicles comprise such an IMU. Therefore, the method can be carried out efficiently.

According to a further implementation, the wheel velocities are determined based on a signal, which is determined by or received from wheel rotation sensors of the vehicle. As stated above with respect to the IMU, also the wheel rotation sensors form part of most modern vehicles and can be used efficiently to carry out steps of the inventive method.

According to a further aspect of the invention, a data processing apparatus comprising at least one computing unit is provided. The computing unit may be a computing unit of the vehicle and/or a computing unit of a cloud computer. The computing unit may comprise one or more subunits, which may or may not be spatially distributed. For example, one or more electronic control units, ECUs, of the vehicle may comprise the computing unit or vice versa. The computing unit is adapted to calculate a current angle of lateral inclination $\alpha$ of a curved roadway according to a computer-implemented method according to the invention.

According to a further aspect of the invention, an electronic vehicle guidance system for a vehicle is provided. The electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Further implementations of the electronic vehicle guidance system follow directly from the various implementations of the computer-implemented method for calculating a current lateral inclination angle of a curved roadway according to the invention and from the various implementations of the method for guiding a vehicle at least in part automatically according to the invention and vice versa respectively. In particular, the electronic vehicle guidance system is configured to carry out a computer-implemented method according to the invention or a method according to the invention, or the electronic vehicle guidance system according to the invention carries out such a method or computer-implemented method.

The electronic vehicle guidance system according to the invention comprises an inertial measuring unit, at least two wheel rotation sensors and a data processing apparatus according to an aspect of the invention. Therein, the inertial measuring unit is designed to determine a current yaw rate $\dot{\theta}$ of the vehicle during a driving maneuver of the vehicle along a curved roadway and/or the vehicle's lateral acceleration $a_y$ during the driving maneuver of the vehicle along the curved roadway. Further, the at least two wheel rotation sensors are designed to generate a signal based on which the wheel velocities of the two wheels of the vehicle in the direction of movement of the vehicle can be determined.

A further aspect of the invention is directed at a vehicle with an electronic vehicle guidance system according to the invention.

A further aspect of the invention is directed at a method for guiding a vehicle according to the invention during a driving maneuver along a curved roadway at least in part automatically by means of an electronic vehicle guidance system according to the invention. Therein, a current angle of lateral inclination $\alpha$ of the roadway is determined according to a computer-implemented method according to the invention, and based on the current angle of lateral inclination $\alpha$ of the roadway, a control signal for longitudinal and/or lateral control of the vehicle is generated. This signal can be used to control a driver assistant function of the vehicle, such as a lane keep assist function and/or a lane centering assist function and/or an automated cruise control function.

According to a further aspect of the invention, a first computer program comprising first instructions is provided. When the first instructions, or the first computer program, respectively, are executed by a data processing apparatus, in particular by an electronic vehicle guidance system according to the invention, for example by the computing unit of the electronic vehicle guidance system, the first instructions cause the data processing apparatus to carry out a computer-implemented method for calculating a current lateral inclination angle of a curved roadway according to the invention.

According to a further aspect of the invention, a second computer program comprising second instructions is provided. When the second computer program or the second instructions, respectively, are executed by an electronic vehicle guidance system according to the invention, in particular by the computing unit of the electronic vehicle guidance system, the second instructions cause the electronic vehicle guidance system to carry out a method for guiding a vehicle at least in part automatically according to the invention.

According to a further aspect of the invention, a computer-readable storage medium is provided. The computer-readable storage medium stores a first computer program and/or a second computer program according to the invention.

The first computer program, the second computer program and the computer-readable storage medium may be considered as respective computer program products comprising the first instructions or the second instructions, respectively.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the figures,

Fig. 1    shows a schematic representation of a vehicle with an exemplary implementation of an electronic vehicle guidance system according to the invention;

Fig. 2    shows a schematic representation of a vehicle with two non-steerable wheels during a driving situation along a laterally inclined curved roadway;

Fig. 3    shows a schematic representation of a vehicle with at least two steerable wheels during a further driving situation along a laterally inclined curved roadway;

Fig. 4    shows a schematic representation of a vehicle during a further driving situation along a laterally inclined curved roadway; and

Fig. 5    shows a schematic representation of the computer-implemented method for determining a current angle of lateral inclination $\alpha$ of a curved roadway according to the invention.

The examples described in the following are preferred implementations of the invention. In the examples, the described components of the implementations each represent individual features of the invention, which are to be considered independently of one another, and thus can also be used individually or in a combination other than the one shown as a component of the invention. Furthermore, the described implementations can also be supplemented by further of the features of the invention already described.

In the figures, identical reference signs denote elements having the same function.

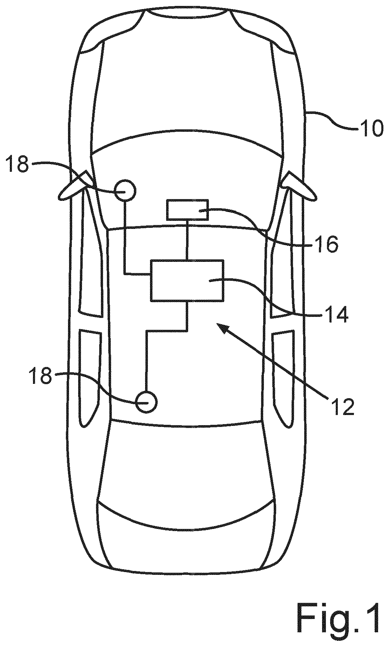

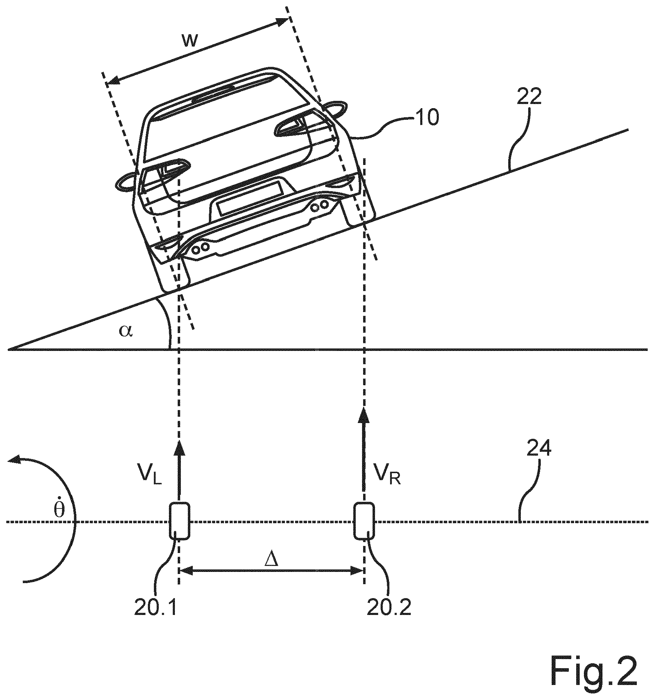

Fig. 1 shows a schematic representation of a vehicle 10 with an exemplary implementation of an electronic vehicle guidance system 12 according to the invention. The electronic vehicle guidance system 12 comprises a computing unit 14, which may determine a current angle of lateral inclination $\alpha$ of a curved roadway during a driving maneuver of the vehicle 10 along the curved roadway (see Figs. 2 to 5).

For example, the electronic vehicle guidance system 12 may comprise an inertial measurement unit (IMU) 16. The IMU 16 may comprise an accelerometer and/or a gyroscope for determining a radius of rotation of the vehicle 10 and/or a velocity of the vehicle 10. In other words, the IMU 16 may be designed to determine a current yaw rate $\dot{\theta}$ of the vehicle 10 while the vehicle 10 is driving along the curved roadway. The IMU 16 may also be designed to transmit date describing the current rate $\dot{\theta}$ of the vehicle 10 to the computing unit 14 for further processing. The computing unit 14 may receive input data comprising the data describing the current yaw rate $\dot{\theta}$ of the vehicle 10 and may calculate the current yaw rate $\dot{\theta}$ and/or a current lateral acceleration $a_y$ of the vehicle 10 depending on the input data.

Optionally, the electronic vehicle guidance system 12 comprises one or more wheel rotation sensors 18. The wheel rotation sensors 18 may be integrated into a state sensor system of the vehicle 10, the state sensor system also comprising a velocity sensor, a steering angle sensor and/or a yaw rate sensor. The wheel rotation sensors 18 may be designed to determine a steering angle of a respective wheel of the vehicle 10 in a predefined time-interval. Alternatively, the wheel rotation sensors 18 and/or the state sensor system may be designed to transfer information relating to said parameters to the computing unit 14 for further processing.

The functionality of the electronic vehicle guidance system 12 as well as respective implementations of computer-implemented methods for determining a current angle of lateral inclination $\alpha$ of a curved roadway during a driving maneuver of a vehicle 10 along the curved roadway according to the invention and methods for guiding the vehicle 10 at least in part automatically according to the invention are explained in more detail in the following with reference to Figs. 2 to 5.

Fig. 2 shows a schematic representation of a vehicle 10 with two non-steerable wheels 20.1, 20.2 during a driving situation along a laterally inclined curved roadway 22.

As the velocity of a wheel 20.1, 20.2 is the multiplication of the yaw rate $\dot{\theta}$ of the vehicle 10 and the radius of rotation of the wheel 20.1, 20.2, then the following equations [1] to [4] can be deduced for fixed (non-steerable) rear wheels vehicles based on basic geometry rules as shown in Fig. 2.

$$[1] \qquad v_R - v_L = \dot{\theta}\,\Delta$$

$$[2] \qquad \Delta = w\,\cos(\alpha)$$

$$[3] \qquad v_R - v_L = \dot{\theta}\,w\,\cos(\alpha)$$

$$[4] \qquad \alpha = \cos^{-1}\left(\frac{v_R - v_L}{\dot{\theta}\,w}\right),$$

wherein $v_R$ denotes the velocity of the right wheel 20.2 at the rear axle 24 of the vehicle 10 in meters per second, $v_L$ denotes the velocity of the left wheel 20.1 at the rear axle 24 of the vehicle 10 in meters per second, $\dot{\theta}$ denotes the yaw rate of the vehicle 10, for example determined by the IMU 16 in radians per second, $\alpha$ denotes the angle of lateral inclination of the banked roadway 22 in degrees, w denotes the distance between the centers of the right and left wheels 20.1, 20.2 of the vehicle 10 at the rear axle 24 in meters.

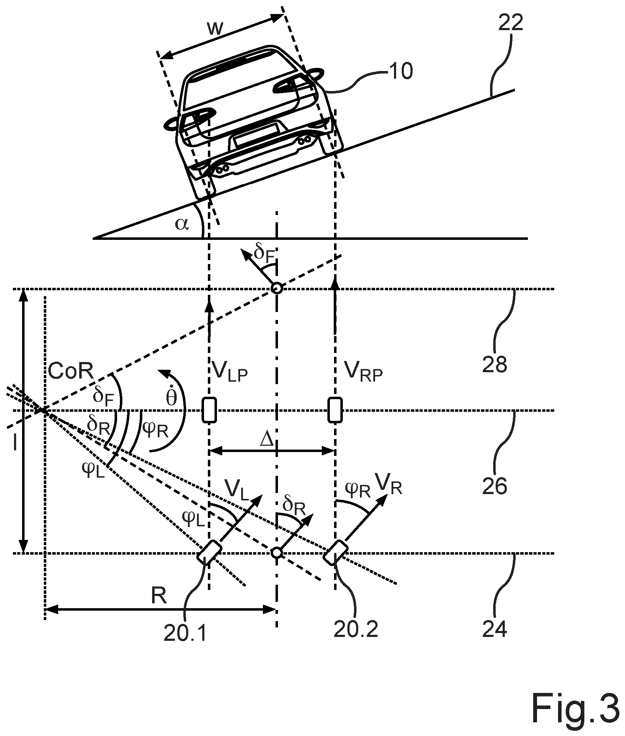

Fig. 3 shows a schematic representation of a vehicle 10 with at least two steerable wheels 20.1, 20.2 during a further driving situation along a laterally inclined curved roadway 22. From Fig. 3 it can be understood, how the obtained formula [4] can be generalized to include the steerable rear wheels by considering the steering angle of each of the right and the left wheels.

The steering angle of each wheel may be different, such that the vehicle is rotating with all its wheels having a common center of rotation point. However, there may be vehicles with steerable rear wheels, wherein one signal value $\delta_R$ for the rear wheel steering is provided, which shall be conceptually a virtual rear wheel angle located at the center of the rear axle. Those vehicles may also provide one signal $\delta_F$ for the front steering at the center of the front axle. Based on the provided virtual rear wheel angle at the center of the rear axle and based on the virtual front wheel angle at the center of the front axle, the wheel angle of each of the right and left wheels can be computed separately. Here, the predefined distance $\ell$ between the front and rear axles (the wheelbase) and the predefined distance $w$ between the centers of the rear right and left wheels have to be considered. Taking into account the radius of rotation of the vehicle $R$, that is the distance between the center of rotation (CoR) and the longitudinal axis of the vehicle, the wheel angles of the right and left wheels $\varphi_R$, $\varphi_L$ can be computed by the following equations [5] to [13]:

$$[5] \qquad \tan(\delta_F) + \tan(-\delta_R) = \frac{\ell}{R}$$

$$[6] \qquad R = \left[\frac{\ell}{\tan(\delta_F) - \tan(\delta_R)}\right]$$

$$[7] \qquad \tan(\varphi_R) = \left(\frac{R}{R + \frac{w}{2}}\right)\tan(\delta_R)$$

$$[8] \qquad \tan(\varphi_L) = \left(\frac{R}{R-\frac{w}{2}}\right)\tan(\delta_R)$$

By substituting $R$ with terms of the given input signals of virtual front and rear wheel angles, the final equations to compute the wheel angles at the rear right and rear left wheels can be obtained as follows:

$$[9] \qquad \tan(\varphi_R) = \left(\frac{\ell}{\ell+\frac{w}{2}[\tan(\delta_F)-\tan(\delta_R)]}\right)\tan(\delta_R)$$

$$[10] \qquad \tan(\varphi_L) = \left(\frac{\ell}{\ell-\frac{w}{2}[\tan(\delta_F)-\tan(\delta_R)]}\right)\tan(\delta_R)$$

Then, by projecting the velocities of the two rear wheels obtained at the real rear axle 24 to the virtual rear axle 26, which is aligned with the CoR of the vehicle 10, the projected velocities of the rear right and left wheels in the direction of motion of the vehicle 10 can be computed as follows:

$$[11] \qquad v_{RP} = v_R \times \cos(\varphi_R)$$

$$[12] \qquad v_{LP} = v_L \times \cos(\varphi_L)$$

According to an exemplary implementation of the invention, the current angle of inclination $\alpha$ can be calculated using the following equation [13], considering the projected velocities $v_{RP}, v_{LP}$ of the steerable wheels:

$$[13] \qquad \alpha = \cos^{-1}\left(\frac{v_{RP}-v_{LP}}{\dot{\theta}\,w}\right).$$

Variables in Fig. 3 and in above-explained equations [8] to [13] denote the following:

$\delta_R$ : Input signal of Virtual Rear Wheel Angle at the Center of Rear Axle
$\delta_F$ : Input signal of Virtual Front Wheel Angle at the Center of Front Axle
$v_R$ : Input signal of Velocity of Rear Right Wheel
$v_L$ : Input signal of Velocity of Rear Left Wheel
$\dot{\theta}$ : Input signal of Vehicle Yaw Rate
$\varphi_R$ : Computed Rear Right Wheel Angle
$\varphi_L$ : Computed Rear Left Wheel Angle
$\ell$ : Distance between Front and Rear Axle (Wheelbase)
$w$ : Distance between the centers of the rear right and left wheels (Width)
$R$ : Radius of Rotation of the Vehicle (Distance between Center of Rotation (CoR) and the longitudinal axis of the Vehicle)
$v_{RP}$: Projected Velocity of rear right wheel on the Virtual Rear Axle (*m/s*).
$v_{LP}$: Projected Velocity of rear left wheel on the Virtual Rear Axle (*m/s*).

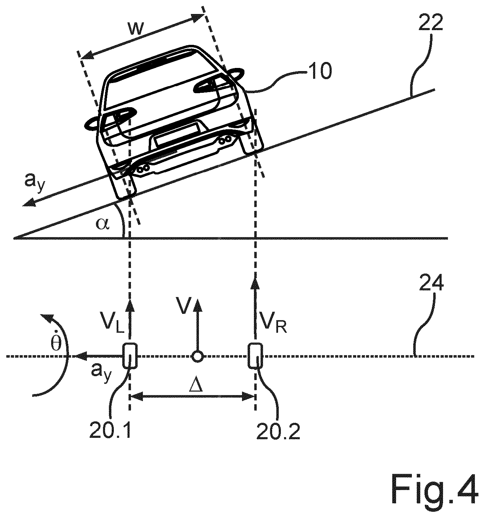

Fig. 4 shows a schematic representation of a vehicle 10 during a further driving situation along a laterally inclined curved roadway 22.
The IMU 16 may contain an accelerometer for determining the vehicle's 10 inertial acceleration components in 3-Dimensions. The lateral acceleration *($a_y$)* is the measured acceleration component in the lateral direction of the vehicle 10, which is positive in the left direction of the vehicle 10 as shown in Fig. 4. The measured lateral acceleration is the difference between the gravitational acceleration from the inclined component of vehicle's 10 weight and the centrifugal acceleration generated from the vehicle 10 speedy steering maneuvering. Accordingly, the following equations [14] to [18] can be deduced.

$$[14] \qquad a_y = g\sin(\alpha) - v\,\dot{\theta}$$

$$[15] \quad v = \frac{v_R + v_L}{2}$$

$$[16] \quad g \sin(\alpha) = a_y + v \, \dot{\theta}$$

$$[17] \quad \sin(\alpha) = \frac{a_y + v \, \dot{\theta}}{g}$$

$$[18] \quad \alpha = \left| \sin^{-1}\left( \frac{a_y + v \, \dot{\theta}}{g} \right) \right|,$$

wherein $g$ = *Gravitational Accleration* $\approx 9.8 \, m/s^2$.

It shall be noted that the computed inclination angle of Banked Roads is always positive (unsigned). That is why in the last equation [18] of Inverse Sin an absolute operation is defined to exclude negative solutions.

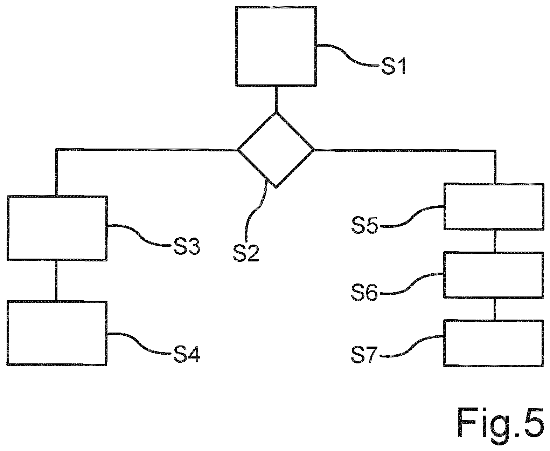

Fig. 5 shows a schematic representation of the computer-implemented method for determining a current angle of lateral inclination $\alpha$ of a curved roadway 22 according to the invention.

In a step S1, during a driving maneuver of the vehicle 10 along the curved roadway 22 a current yaw rate $\dot{\theta}$ of the vehicle 10 is determined. In a step S2, it is determined, whether an absolute value of the current yaw rate $\dot{\theta}$ is greater than or less than a predefined threshold value $\theta_{th}$.

If the absolute value of the current yaw rate $\dot{\theta}$ is greater than the predefined threshold $\dot{\theta}_{th}$, a difference in velocity projected from current velocities of two wheels 20.1, 20.2 of the vehicle 10 in a direction of movement of the vehicle 10 is determined, wherein the two wheels 20.1, 20.2 share either a front axle 28 or a rear axle 24 of the vehicle 10 as their common axle (step S3). Then, the current angle of lateral inclination $\alpha$ of the roadway 22 is calculated based on a ratio of the difference in velocity against the product of the current yaw rate $\dot{\theta}$ and a distance w between the centers of the two wheels 20.1, 20.2 along their common axle (step S4).

If, however, the current yaw rate $\dot{\theta}$ is less than the predefined threshold $\dot{\theta}_{th}$, the vehicle's 10 lateral acceleration $a_y$ is determined or defined as the acceleration component directed towards the rotational center of the curved roadway 22, wherein the lateral acceleration $a_y$ equals the difference between the gravitational acceleration from an inclined component of the vehicle's 10 weight and the centrifugal acceleration resulting from the driving maneuver of the vehicle 10 along the curved roadway 22. As a result, the following sequence of computing steps are done. An average velocity of the vehicle 10 in the direction of movement of the vehicle 10 is calculated as the average velocity of the two wheels 20.1, 20.2 (step S5). Then, the centrifugal acceleration resulting from the driving maneuver of the vehicle 10 along the curved roadway 22 is computed as the product of the average velocity and the current yaw rate $\dot{\theta}$ (step S6). Then, the current angle of lateral inclination $\alpha$ of the roadway 22 is calculated based on a ratio of the sum of the lateral acceleration $a_y$ and the computed centrifugal acceleration against the gravitational acceleration $g$ (step S7).

An exemplary implementation of the inventive method can also be expressed by the following equations [19] to [25]:
Therein, $\alpha$ = *Compute Inclination Angle* ($v_R$, $v_L$, $\delta_R$, $\delta_F$, $\ell$, $\dot{\theta}$, $w$, $a_y$, $g$, $\dot{\theta}_{th}$).
*if* ($|\dot{\theta}| > \dot{\theta}_{th}$):

$$[19] \quad \varphi_R = \tan^{-1}\left( \left( \frac{\ell}{\ell + \frac{w}{2}[\tan(\delta_F) - \tan(\delta_R)]} \right) \tan(\delta_R) \right)$$

$$[20] \quad \varphi_L = \tan^{-1}\left( \left( \frac{\ell}{\ell - \frac{w}{2}[\tan(\delta_F) - \tan(\delta_R)]} \right) \tan(\delta_R) \right)$$

$$[21] \quad v_{R_P} = v_R \times \cos(\varphi_R)$$

$$[22] \quad v_{L_P} = v_L \times \cos(\varphi_L)$$

$$[23] \quad \alpha = \cos^{-1}\left(\frac{v_{RP} - v_{LP}}{\dot{\theta}\, w}\right)$$

Else:

$$[24] \quad v = \frac{v_R + v_L}{2}$$

$$[25] \quad \alpha = \left|\sin^{-1}\left(\frac{a_y + v\,\dot{\theta}}{g}\right)\right|.$$

The examples of the invention show, how the reliability of determination of a current angle of lateral inclination of a curved roadway can be improved.

## Claims

1. Computer-implemented method for determining a current angle of lateral inclination $\alpha$ of a curved roadway (22) during a driving maneuver of a vehicle (10) along the curved roadway (22), wherein during the driving maneuver a current yaw rate $\dot{\theta}$ of the vehicle (10) is determined, wherein,
   if the absolute value of the current yaw rate $\dot{\theta}$ is greater than a predefined threshold $\theta_{th}$

   a) a difference in velocity projected from current velocities of two wheels (20.1, 20.2) of the vehicle (10) in a direction of movement of the vehicle (10) is determined, wherein the two wheels (20.1, 20.2) share either a front axle (28) or a rear axle (24) of the vehicle (10) as their common axle,
   b) the current angle of lateral inclination $\alpha$ of the roadway (22) is calculated based on a ratio of the difference in projected velocity against the product of the current yaw rate $\dot{\theta}$ and a distance w between the centers of the two wheels (20.1, 20.2) along their common axle, and
   if the current yaw rate $\dot{\theta}$ is less than the predefined threshold $\dot{\theta}_{th}$
   c) the vehicle's (10) lateral acceleration $a_y$ is determined as the acceleration component directed towards the rotational center of the curved roadway (22), wherein the lateral acceleration $a_y$ equals the difference between the gravitational acceleration from an inclined component of the vehicle's (10) weight and the centrifugal acceleration resulting from the driving maneuver of the vehicle (10) along the curved roadway (22),
   d) an average velocity of the vehicle (10) in the direction of movement of the vehicle (10) is calculated as the average velocity of the two wheels (20.1, 20.2),
   e) the centrifugal acceleration resulting from the driving maneuver of the vehicle (10) along the curved roadway (22) is computed as the product of the average velocity and the current yaw rate $\dot{\theta}$, and
   f) the current angle of lateral inclination $\alpha$ of the roadway (22) is calculated based on a ratio of the sum of the lateral acceleration $a_y$ and the computed centrifugal acceleration against the gravitational acceleration $g$.

2. Computer-implemented method according to claim 1, wherein the current angle of inclination $\alpha$ is calculated in step b) using the following equation I, wherein $\alpha$ denotes the angle of lateral inclination of the roadway (22), $v_R$ denotes the velocity of a first of the two wheels (20.1, 20.2) in the direction of movement of the vehicle (10), preferably the right rear wheel (20.2) of the vehicle (10), $v_L$ denotes the velocity of a second of the two wheels (20.1, 20.2) in the direction of movement of the vehicle (10), preferably the left rear wheel (20.1) of the vehicle (10), $\dot{\theta}$ denotes the yaw rate of the vehicle (10) and w denotes the distance between the two wheels (20.1, 20.2) along their common axle:

$$\alpha = \cos^{-1}\left(\frac{v_R - v_L}{\dot{\theta}\, w}\right).$$

3. Computer-implemented method according to any one of the preceding claims, wherein the current angle of inclination $\alpha$ is calculated in step f) using the following equation II, wherein $a_y$ denotes the lateral acceleration of the vehicle (10), $v$ denotes the average velocity of the two wheels (20.1, 20.2) in the direction of movement of the vehicle (10), $\dot{\theta}$ denotes the yaw rate of the vehicle (10) and $g$ denotes the gravitational acceleration:

$$\alpha = \left| \sin^{-1}\left( \frac{a_y + v\,\dot{\theta}}{g} \right) \right|.$$

4. Computer-implemented method according to any one of the preceding claims, wherein the two wheels (20.1, 20.2) are steerable wheels, wherein a respective steering angle of each of the two wheels (20.1, 20.2) is considered in calculating the current angle of inclination $\alpha$ in step b).

5. Computer-implemented method according to claim 4, wherein the current angle of inclination $\alpha$ is calculated in step b) based on the projected velocities $v_{RP}, v_{LP}$ of the wheels (20.1, 20.2), wherein the projected velocities $v_{RP}, v_{LP}$ are calculated based on the respective steering angle of each of the two wheels (20.1, 20.2) and the respective current velocity of each of the two wheels (20.1, 20.2).

6. Computer-implemented method according to claim 5, wherein the current angle of inclination $\alpha$ is calculated in step b) using the following equation III:

$$\alpha = \cos^{-1}\left( \frac{v_{RP} - v_{LP}}{\dot{\theta}\,w} \right).$$

7. Computer-implemented method according to any one of the preceding claims, wherein the current yaw rate $\dot{\theta}$ and/or the vehicle's (10) lateral acceleration $a_y$ is determined based on a signal determined by an inertial measuring unit (16) of the vehicle.

8. Computer-implemented method according to any one of the preceding claims, wherein the velocities of the two wheels (20.1, 20.2) in the direction of movement of the vehicle (10) are determined based on respective signals determined by wheel rotation sensors (18) of the vehicle (10).

9. Data processing apparatus comprising at least one computing unit (14), which is adapted to calculate a current angle of lateral inclination $\alpha$ of a curved roadway (22) according to a computer-implemented method according to any one of the preceding claims.

10. Electronic vehicle guidance system (12) for a vehicle (10), comprising an inertial measuring unit (16), a steering angle sensor, at least two wheel rotation sensors (18) and a data processing apparatus according to claim 9, wherein

- the inertial measuring unit (16) is designed to determine a current yaw rate $\dot{\theta}$ of the vehicle (10) during a driving maneuver of the vehicle (10) along a curved roadway (22) and/or the vehicle's (10) lateral acceleration $a_y$ during the driving maneuver of the vehicle (10) along the curved roadway (22), and
- the at least two wheel rotation sensors (18) are designed to generate a signal based on which the wheel velocities of the two wheels (20.1, 20.2) of the vehicle (10) can be determined, and
- the steering angle sensor is used to determine the steering angle which is the angle of wheel direction at the center of the axle of the two wheels (20.1, 20.2) of the vehicle (10) and at the center of the front axle of the vehicle (10), such that the projected wheel velocities of the two wheels (20.1, 20.2) of the vehicle (10) in the direction of movement of the vehicle (10) can be determined.

11. Vehicle (10) with an electronic vehicle guidance system (12) according to claim 10.

12. Method for guiding a vehicle (10) according to claim 11 during a driving maneuver along a curved roadway (22) at least in part automatically by means of an electronic vehicle guidance system (12) according to claim 10, wherein

- a current angle of lateral inclination $\alpha$ of the roadway (22) is determined according to a computer-implemented method according to any one of claims 1 to 8, and
- based on the current angle of lateral inclination $\alpha$ of the roadway (22), a control signal for longitudinal and/or lateral control of the vehicle (10) is generated.

13. Computer program comprising instructions which, when the program is executed by a data processing apparatus according to claim 9, cause the data processing apparatus to carry out the method of any one of claims 1 to 8.

14. Computer program comprising instructions which, when the program is executed by a computing unit (14) of an electronic vehicle guidance system (12) according to claim 10, cause the electronic vehicle guidance system (12) to carry out the method of claim 12.

15. A computer-readable storage medium having stored thereon the computer program of claim 13 and/or the computer program of claim 14.

**Patentansprüche**

1. Computerimplementiertes Verfahren zur Bestimmung eines aktuellen Querneigungswinkels $\alpha$ einer gekrümmten Fahrbahn (22) während eines Fahrmanövers eines Fahrzeugs (10) entlang der gekrümmten Fahrbahn (22), wobei während des Fahrmanövers eine aktuelle Gierrate $\dot{\theta}$ des Fahrzeugs (10) bestimmt wird, wobei wenn der Betrag der aktuellen Gierrate $\dot{\theta}$ größer als ein vordefinierter Schwellenwert $\dot{\theta}_{th}$ ist,

   a) eine Geschwindigkeitsdifferenz, die anhand der aktuellen Geschwindigkeiten zweier Räder (20.1, 20.2) des Fahrzeugs (10) in Bewegungsrichtung projiziert wird, bestimmt wird, wobei die beiden Räder (20.1, 20.2) entweder eine Vorderachse (28) oder eine Hinterachse (24) des Fahrzeugs (10) als gemeinsame Achse haben,
   b) der aktuelle Querneigungswinkel $\alpha$ der Fahrbahn (22) anhand eines Verhältnisses der projizierten Geschwindigkeitsdifferenz zum Produkt der aktuellen Gierrate $\dot{\theta}$ und der Strecke $w$ zwischen den Mittelpunkten der beiden Räder (20.1, 20.2) entlang ihrer gemeinsamen Achse berechnet wird, und
   wenn die aktuelle Gierrate $\dot{\theta}$ kleiner als der vordefinierte Schwellenwert $\dot{\theta}_{th}$ ist,
   c) die Querbeschleunigung $a_y$ des Fahrzeugs (10) bestimmt wird als die Beschleunigungskomponente, die zum Rotationszentrum der gekrümmten Fahrbahn (22) gerichtet ist, wobei die Querbeschleunigung $a_y$ die Differenz zwischen der gravitationsbedingten Beschleunigung einer geneigten Gewichtskomponente des Fahrzeugs (10) und der Zentrifugalbeschleunigung ist, die aus dem Fahrmanöver des Fahrzeugs (10) entlang der gekrümmten Fahrbahn (22) resultiert,
   d) eine durchschnittliche Geschwindigkeit des Fahrzeugs (10) in Bewegungsrichtung des Fahrzeugs (10) als Durchschnittsgeschwindigkeit der beiden Räder (20.1, 20.2) berechnet wird,
   e) die Zentrifugalbeschleunigung, die aus dem Fahrmanöver des Fahrzeugs (10) entlang der gekrümmten Fahrbahn (22) resultiert, als Produkt aus der durchschnittlichen Geschwindigkeit und der aktuellen Gierrate $\dot{\theta}$ berechnet wird, und
   f) der aktuelle Querneigungswinkel $\alpha$ der Fahrbahn (22) anhand eines Verhältnisses der Summe aus der Querbeschleunigung $a_y$ und der berechneten Zentrifugalbeschleunigung zur Erdbeschleunigung g berechnet wird.

2. Computerimplementiertes Verfahren gemäß Anspruch 1, wobei der aktuelle Querneigungswinkel $\alpha$ in Schritt b) unter Verwendung der folgenden Gleichung I berechnet wird, wobei $\alpha$ den Querneigungswinkel der Fahrbahn (22), $v_R$ die Geschwindigkeit eines ersten der beiden Räder (20.1, 20.2) in Bewegungsrichtung des Fahrzeugs (10), bevorzugt des rechten Hinterrads (20.2) des Fahrzeugs (10), $v_L$ die Geschwindigkeit eines zweiten der beiden Räder (20.1, 20.2) in Bewegungsrichtung des Fahrzeugs (10), bevorzugt des linken Hinterrads (20.1) des Fahrzeugs (10), $\dot{\theta}$ die Gierrate des Fahrzeugs (10) und $w$ die Strecke zwischen den beiden Rädern (20.1, 20.2) entlang ihrer gemeinsamen Achse bezeichnet:

$$\alpha = \cos^{-1}\left(\frac{v_R - v_L}{\dot{\theta}\,w}\right).$$

3. Computerimplementiertes Verfahren gemäß einem der vorangegangenen Ansprüche, wobei der aktuelle Querneigungswinkel $\alpha$ im Schritt f) unter Verwendung der folgenden Gleichung II berechnet wird, wobei $a_y$ die Querbeschleunigung des Fahrzeugs (10), $v$ die durchschnittliche Geschwindigkeit der beiden Räder (20.1, 20.2) in Bewegungsrichtung des Fahrzeugs (10), $\dot{\theta}$ die Gierrate des Fahrzeugs (10) und $g$ die Erdbeschleunigung bezeichnet:

$$\alpha = \left|\sin^{-1}\left(\frac{a_y + v\,\dot{\theta}}{g}\right)\right|.$$

4. Computerimplementiertes Verfahren gemäß einem der vorangegangenen Ansprüche, wobei die beiden Räder (20.1, 20.2) lenkbare Räder sind, wobei bei der Berechnung des aktuellen Querneigungswinkels $\alpha$ im Schritt b) ein jeweiliger Lenkwinkel jedes der beiden Räder (20.1, 20.2) berücksichtigt wird.

**5.** Computerimplementiertes Verfahren gemäß Anspruch 4, wobei der aktuelle Querneigungswinkel $\alpha$ im Schritt b) anhand der projizierten Geschwindigkeiten $v_{Rp}$, $v_{Lp}$ der Räder (20.1, 20.2) berechnet wird, wobei die projizierten Geschwindigkeiten $v_{Rp}$, $v_{Lp}$ auf Grundlage des jeweiligen Lenkwinkels jedes der beiden Räder (20.1, 20.2) und der jeweiligen aktuellen Geschwindigkeit jedes der beiden Räder (20.1, 20.2) berechnet werden.

**6.** Computerimplementiertes Verfahren gemäß Anspruch 5, wobei der aktuelle Querneigungswinkel $\alpha$ im Schritt b) unter Verwendung der folgenden Gleichung III berechnet wird:

$$\alpha = \cos^{-1}\left(\frac{v_{RP} - v_{LP}}{\dot{\theta}\, w}\right).$$

**7.** Computerimplementiertes Verfahren gemäß einem der vorangegangenen Ansprüche, wobei die aktuelle Giergrate $\dot{\theta}$ und/oder die Querbeschleunigung $a_y$ des Fahrzeugs (10) auf Grundlage eines von einem Trägheitsmessgerät (16) des Fahrzeugs bestimmten Signals bestimmt werden.

**8.** Computerimplementiertes Verfahren gemäß einem der vorangegangenen Ansprüche, wobei die Geschwindigkeiten der beiden Räder (20.1, 20.2) in Bewegungsrichtung des Fahrzeugs (10) auf Grundlage jeweiliger Signale, die von Raddrehzahlsensoren (18) des Fahrzeugs (10) bestimmt werden, ermittelt werden.

**9.** Datenverarbeitungsgerät, das mindestens eine Recheneinheit (14) umfasst, die dazu ausgebildet ist, einen aktuellen Querneigungswinkel $\alpha$ einer gekrümmten Fahrbahn (22) gemäß einem computerimplementierten Verfahren gemäß einem der vorangegangenen Ansprüche zu berechnen.

**10.** Elektronisches Fahrzeugführungssystem (12) für ein Fahrzeug (10), das ein Trägheitsmessgerät (16), einen Lenkwinkelsensor, mindestens zwei Raddrehzahlsensoren (18) und ein Datenverarbeitungsgerät gemäß Anspruch 9 umfasst, wobei

- das Trägheitsmessgerät (16) dazu ausgebildet ist, eine aktuelle Gierrate $\dot{\theta}$ des Fahrzeugs (10) während eines Fahrmanövers entlang der gekrümmten Fahrbahn (22) und/oder die Querbeschleunigung $a_y$ des Fahrzeugs (10) während des Fahrmanövers des Fahrzeugs (10) entlang der gekrümmten Fahrbahn (22) zu bestimmen, und
- die mindestens zwei Raddrehzahlsensoren (18) dazu ausgebildet sind, ein Signal zu erzeugen, anhand dessen die Radgeschwindigkeiten der beiden Räder (20.1, 20.2) des Fahrzeugs (10) bestimmt werden können, und
- der Lenkwinkelsensor dazu verwendet wird, den Lenkwinkel zu bestimmen, der dem Winkel der Räderrichtung am Mittelpunkt der Achse der beiden Räder (20.1, 20.2) des Fahrzeugs (10) sowie am Mittelpunkt der Vorderachse des Fahrzeugs (10) entspricht, sodass die projizierten Radgeschwindigkeiten der beiden Räder (20.1, 20.2) des Fahrzeugs (10) in Bewegungsrichtung des Fahrzeugs (10) bestimmt werden können.

**11.** Fahrzeug (10) mit einem elektronischen Fahrzeugführungssystem (12) gemäß Anspruch 10.

**12.** Verfahren zur zumindest teilweise automatischen Führung eines Fahrzeugs (10) gemäß Anspruch 11 während eines Fahrmanövers entlang einer gekrümmten Fahrbahn (22) unter Verwendung eines elektronischen Fahrzeugführungssystems (12) gemäß Anspruch 10, wobei

- ein aktueller Querneigungswinkel $\alpha$ der Fahrbahn (22) gemäß einem computerimplementierten Verfahren gemäß einem der Ansprüche 1 bis 8 bestimmt wird, und
- auf Grundlage des aktuellen Querneigungswinkels $\alpha$ der Fahrbahn (22) ein Steuersignal für die Längs- und/oder Quersteuerung des Fahrzeugs (10) generiert wird.

**13.** Computerprogramm, das Anweisungen umfasst, die, wenn das Computerprogramm von einem Datenverarbeitungsgerät gemäß Anspruch 9 ausgeführt wird, das Datenverarbeitungsgerät dazu veranlassen, das Verfahren gemäß einem der Ansprüche 1 bis 8 auszuführen.

**14.** Computerprogramm, das Anweisungen umfasst, die, wenn das Computerprogramm von einer Recheneinheit (14) eines elektronischen Fahrzeugführungssystems (12) gemäß Anspruch 10 ausgeführt wird, das elektronische Fahrzeugführungssystem (12) dazu veranlassen, das Verfahren gemäß Anspruch 12 auszuführen.

**15.** Computerlesbares Speichermedium, auf dem das Computerprogramm gemäß Anspruch 13 und/oder das Computerprogramm gemäß Anspruch 14 gespeichert ist.

**Revendications**

1. Procédé mis en œuvre par ordinateur de détermination d'un angle actuel d'inclinaison latérale $\alpha$ d'une chaussée incurvée (22) pendant une manœuvre de conduite d'un véhicule (10) le long de la chaussée incurvée (22), dans lequel pendant la manœuvre de conduite une vitesse de lacet actuelle $\dot{\theta}$ du véhicule (10) est déterminée, dans lequel si la valeur absolue de la vitesse de lacet actuelle $\dot{\theta}$ est supérieure à un seuil prédéfini $\dot{\theta}_{ème}$

   a) une différence de vitesse projetée à partir de vitesses actuelles de deux roues (20.1, 20.2) du véhicule (10) dans une direction de déplacement du véhicule (10) est déterminée, dans lequel les deux roues (20.1, 20.2) partagent soit un essieu avant (28) soit un essieu arrière (24) du véhicule (10) en tant que leur essieu commun,
   b) l'angle actuel d'inclinaison latérale $\alpha$ de la chaussée (22) est calculé sur la base d'un rapport de la différence de vitesse projetée par rapport au produit de la vitesse de lacet actuelle $\dot{\theta}$ et d'une distance w entre les centres des deux roues (20.1, 20.2) le long de leur essieu commun, et
   si la vitesse de lacet actuelle $\dot{\theta}$ est inférieure au seuil prédéfini $\dot{\theta}_{ème}$
   c) l'accélération latérale $a_y$ du véhicule (10) est déterminée en tant que la composante d'accélération dirigée vers le centre de rotation de la chaussée incurvée (22), dans lequel l'accélération latérale $a_y$ est égale à la différence entre l'accélération gravitationnelle d'une composante inclinée du poids du véhicule (10) et l'accélération centrifuge résultant de la manœuvre de conduite du véhicule (10) le long de la chaussée incurvée (22),
   d) une vitesse moyenne du véhicule (10) dans la direction de déplacement du véhicule (10) est calculée en tant que la vitesse moyenne des deux roues (20.1, 20.2),
   e) l'accélération centrifuge résultant de la manœuvre de conduite du véhicule (10) le long de la chaussée incurvée (22) est calculée en tant que le produit de la vitesse moyenne et de la vitesse de lacet actuelle $\dot{\theta}$, et
   f) l'angle actuel d'inclinaison latérale $\alpha$ de la chaussée (22) est calculé sur la base d'un rapport de la somme de l'accélération latérale $a_y$ et de l'accélération centrifuge calculée par rapport à l'accélération gravitationnelle g.

2. Procédé mis en œuvre par ordinateur selon la revendication 1, dans lequel l'angle actuel d'inclinaison $\alpha$ est calculé à l'étape b) à l'aide de l'équation I suivante, dans laquelle $\alpha$ désigne l'angle d'inclinaison latérale de la chaussée (22), $v_R$ désigne la vitesse d'une première des deux roues (20.1, 20.2) dans la direction de déplacement du véhicule (10), de préférence la roue arrière droite (20.2) du véhicule (10), $v_L$ désigne la vitesse d'une deuxième des deux roues (20.1, 20.2) dans la direction de déplacement du véhicule (10), de préférence la roue arrière gauche (20.1) du véhicule (10), $\dot{\theta}$ désigne la vitesse de lacet du véhicule (10) et w désigne la distance entre les deux roues (20.1, 20.2) le long de leur essieu commun :

$$\alpha = \cos^{-1}\left(\frac{v_R - v_L}{\dot{\theta}\, w}\right).$$

3. Procédé mis en œuvre par ordinateur selon l'une quelconque des revendications précédentes, dans lequel l'angle actuel d'inclinaison $\alpha$ est calculé à l'étape f) à l'aide de l'équation II suivante, dans laquelle $a_y$ désigne l'accélération latérale du véhicule (10), v désigne la vitesse moyenne des deux roues (20.1, 20.2) dans la direction de déplacement du véhicule (10), $\dot{\theta}$ désigne la vitesse de lacet du véhicule (10) et g désigne l'accélération gravitationnelle :

$$\alpha = \left|\sin^{-1}\left(\frac{a_y + v\,\dot{\theta}}{g}\right)\right|.$$

4. Procédé mis en œuvre par ordinateur selon l'une quelconque des revendications précédentes, dans lequel les deux roues (20.1, 20.2) sont des roues orientables, dans lequel un angle de braquage respectif de chacune des deux roues (20.1, 20.2) est considéré dans le calcul de l'angle actuel d'inclinaison $\alpha$ à l'étape b).

5. Procédé mis en œuvre par ordinateur selon la revendication 4, dans lequel l'angle actuel d'inclinaison $\alpha$ est calculé à l'étape b) sur la base des vitesses projetées $v_{Rp}$, $v_{Lp}$ des roues (20.1, 20.2), dans lequel les vitesses projetées $v_{Rp}$, $v_{Lp}$ sont calculées sur la base de l'angle de braquage respectif de chacune des deux roues (20.1, 20.2) et de la vitesse actuelle respective de chacune des deux roues (20.1, 20.2).

6. Procédé mis en œuvre par ordinateur selon la revendication 5, dans lequel l'angle actuel d'inclinaison $\alpha$ est calculé à l'étape b) à l'aide de l'équation III suivante :

$$\alpha = \cos^{-1}\left(\frac{v_{RP} - v_{LP}}{\dot{\theta}\, w}\right).$$

7. Procédé mis en œuvre par ordinateur selon l'une quelconque des revendications précédentes, dans lequel la vitesse de lacet actuelle $\dot{\theta}$ et/ou l'accélération latérale du véhicule (10) $a_y$ est déterminée sur la base d'un signal déterminé par une unité de mesure inertielle (16) du véhicule.

8. Procédé mis en œuvre par ordinateur selon l'une quelconque des revendications précédentes, dans lequel les vitesses des deux roues (20.1, 20.2) dans la direction de déplacement du véhicule (10) sont déterminées sur la base de signaux respectifs déterminés par des capteurs de rotation de roue (18) du véhicule (10).

9. Appareil de traitement de données comprenant au moins une unité de calcul (14), qui est conçue pour calculer un angle actuel d'inclinaison latérale $\alpha$ d'une chaussée incurvée (22) selon un procédé mis en œuvre par ordinateur selon l'une quelconque des revendications précédentes.

10. Système de guidage de véhicule électronique (12) pour un véhicule (10), comprenant une unité de mesure inertielle (16), un capteur d'angle de braquage, au moins deux capteurs de rotation de roue (18) et un appareil de traitement de données selon la revendication 9, dans lequel

   - l'unité de mesure inertielle (16) est conçue pour déterminer une vitesse de lacet actuelle $\dot{\theta}$ du véhicule (10) pendant une manœuvre de conduite du véhicule (10) le long d'une chaussée incurvée (22) et/ou de l'accélération latérale du véhicule (10) $a_y$ pendant la manœuvre de conduite du véhicule (10) le long de la chaussée incurvée (22), et
   - lesdits au moins deux capteurs de rotation de roue (18) sont conçus pour générer un signal sur la base duquel les vitesses de roue des deux roues (20.1, 20.2) du véhicule (10) peuvent être déterminées, et
   - le capteur d'angle de braquage est utilisé pour déterminer l'angle de braquage qui est l'angle de direction de roue au niveau du centre de l'essieu des deux roues (20.1, 20.2) du véhicule (10) et au niveau du centre de l'essieu avant du véhicule (10), de telle sorte que les vitesses de roue projetées des deux roues (20.1, 20.2) du véhicule (10) dans la direction de déplacement du véhicule (10) peuvent être déterminées.

11. Véhicule (10) avec un système électronique de guidage de véhicule (12) selon la revendication 10.

12. Procédé de guidage d'un véhicule (10) selon la revendication 11 pendant une manœuvre de conduite le long d'une chaussée incurvée (22) au moins en partie automatiquement au moyen d'un système de guidage de véhicule électronique (12) selon la revendication 10, dans lequel

   - un angle actuel d'inclinaison latérale $\alpha$ de la chaussée (22) est déterminé selon un procédé mis en œuvre par ordinateur selon l'une quelconque des revendications 1 à 8, et
   - sur la base de l'angle actuel d'inclinaison latérale $\alpha$ de la chaussée (22), un signal de commande pour une commande longitudinale et/ou latérale du véhicule (10) est généré.

13. Programme d'ordinateur comprenant des instructions qui, lorsque le programme est exécuté par un appareil de traitement de données selon la revendication 9, amènent l'appareil de traitement de données à mettre en œuvre le procédé selon l'une quelconque des revendications 1 à 8.

14. Programme d'ordinateur comprenant des instructions qui, lorsque le programme est exécuté par une unité de calcul (14) d'un système de guidage de véhicule électronique (12) selon la revendication 10, amènent le système de guidage de véhicule électronique (12) à mettre en œuvre le procédé selon la revendication 12.

15. Support de stockage lisible par ordinateur sur lequel est stocké le programme d'ordinateur selon la revendication 13 et/ou le programme d'ordinateur selon la revendication 14.

Fig.1

Fig.2

17

Fig.3

Fig.4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10242123 A1
- DE 102012210535 A1
- DE 102013216667 A1
- EP 1013524 B1
- WO 2021144105 A
- US 20170259818 A1